(19) **Europäisches Patentamt**

**European Patent Office**

**Office européen des brevets**

(11) Veröffentlichungsnummer: **0 261 564**
**A2**

(12) ## EUROPÄISCHE PATENTANMELDUNG

(21) Anmeldenummer: **87113509.1**

(51) Int. Cl.4: **H05B 1/02 , H05B 3/22**

(22) Anmeldetag: **16.09.87**

(30) Priorität: **20.09.86 DE 3632004**
**21.07.87 DE 3724090**

(43) Veröffentlichungstag der Anmeldung:
**30.03.88 Patentblatt 88/13**

(84) Benannte Vertragsstaaten:
**AT BE CH DE ES FR GB GR IT LI LU NL SE**

(71) Anmelder: **Krauss, Rosemarie**
**Mühlbachweg 17**
**D-8217 Grassau/Mietenkam(DE)**

(72) Erfinder: **Krauss, Hermann Willy**
**Kelheimer Strasse 31**
**D-8432 Beilngries(DE)**
Erfinder: **Wersinger, Helmut**
**Rettenpackerstrasse 4**
**A-5020 Salzburg(AT)**
Erfinder: **Kupferer, Günter**
**Richterstrasse 37**
**D-8520 Erlangen(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Flächenheizelement und Einrichtung zum Regeln der Temperatur des Flächenheizelementes.**

(57) Es wird ein Flächenheizelement mit einer Trägerplatte (10) beschrieben, die Rillen (12, 18, 20) aufweist, in die ein Heizelement (24) eingelegt ist. Die Trägerplatte (10) weist nebeneinander parallele erste Rillen (12) und mindestens zwei zweite Rillen (18) auf, die die ersten Rillen (12) kreuzen. Benachbarte erste Rillen (12) bilden mit der einen und der anderen zweiten Rille (18) abwechselnd einen abgerundeten Umlenkabschnitt für das mäanderförmige Heizelement (24). Die Einrichtung zum Regeln der Temperatur des Flächenheizelementes weist eine Raumtemperaturregeleinrichtung (122), eine Betriebstemperatureinstelleinrichtung (124) und eine Schalteinrichtung (198) zur Unterbrechung bzw. Einschaltung des Stromflusses zwischen einer Stromquelle und dem Heizelement auf. Die Raumtemperaturregeleinrichtung (122) weist einen Spannungsteiler aus einem temperaturabhängigen Widerstand (R3) und einem veränderbaren Widerstand (R) auf. Die Betriebstemperatureinstelleinrichtung (124) weist einen Stufenschalter (120) auf, an dessen Schaltstufen unterschiedliche elektrische Widerstände (R261, R262, R263, R264) angeschlossen sind. Die zweiten Anschlusselemente dieser unterschiedlichen Widerstände sind mit einem zweiten temperaturabhängigen Widerstand (R13) zu einem Spannungsteiler in Reihe geschaltet. Eine Schaltstufe (146) weist ein Schaltrelais (198) auf, dessen Schaltkontakte (206) sich im Stromkreis des elektrischen Heizelementes befinden.

FIG. 4

## Flächenheizelement und Einrichtung zum Regeln der Temperatur des Flächenheizelementes

Die Erfindung betrifft ein Flächenheizelement mit einer Trägerplatte, die mit Rillen versehen ist, in die ein Flächenheizelement eingelegt ist, und eine Einrichtung zum Regeln der Temperatur des Flächenheizelementes, mit einer Regeleinrichtung für die Raumtemperatur und mit einer Schalteinrichtung zur Unterbrechung bzw. Einschaltung des Stromflusses zwischen einer Stromquelle und dem Heizelement.

Bei derartigen Flächenheizelementen kann die Trägerplatte aus Natur-oder Kunststein bestehen. Bei dem Heizelement eines derartigen Flächenheizelementes kann es sich um ein elektrisches Widerstandsmaterial in Draht-oder Bandform, oder um ein Rohr handeln, das von einem erwärmten Medium durchströmt wird. In Abhängigkeit vom Heizelement sind die beiden Anschlussenden des Heizelementes mit einem Stecker zum Anschluss an eine Steckdose für Hetzspannung oder als Anschlussarmaturen ausgebildet.

Aus der DE-OS 29 37 498 ist ein Fassadenelement bekannt, das in einer Trägerplatte Rille aufweisen kann. Diese Rillen sind in die Trägerplatte mäanderförmig eingearbeitet. Die mäanderförmigen Rillen sind in den Umlenkbereichen mit Kanten ausgebildet, so dass die Anordnung eines eine bestimmte Biegesteifheit aufweisenden Heizelementes in den Rillen Probleme aufwirft. Diese Probleme werden zwar bei der aus der DE-PS 30 32 968 bekannten Flächenheizung vermieden, weil dort die in die Trägerplatte eingearbeiteten Rillen eine kreisringförmige Gestalt aufweisen und das Heizelement mit dem Radius der kreisringförmigen Rillen entsprechenden Krümmungsradien gebogen wird. Bei dem zuletzt genannten bekannten Flächenheizelement werden die in der Trägerplatte vorhandenen Rillen jedoch nur zum Teil für das Heizelement benötigt, so dass die Produktionskosten zur Herstellung der Rillen gross sind. Ausserdem weisen bei diesem Flächenheizelement die beidenAnschlussenden des Heizelementes voneinander einen grossen Abstand auf.

Ein Flächenheizelement der oben beschriebenen Art ist beispielsweise aus dem DE-GM 85 32 801 bekannt. Bei solchen Flächenheizelementen weist die Schalteinrichtung zur Unterbrechung bzw. Einschaltung des Stromflusses zwischen der Stromquelle und dem Heizelement einen Bimetallschalter auf. Mit einem solchen Bimetallschalter wird der Stromfluss durch das Heizelement hindurch unterbrochen, wenn das Heizelement eine bestimmte Temperatur erreicht hat. Da das Ansprechverhalten eines derartigen Bimetallschalters in einem relativ grossen Temperaturbereich schwankt, ist mit einer einen Bimetallschalter aufweisenden Schalteinrichtung nur eine vergleichsweise grobe Temperaturregelung eines Heizelementes, insbesondere eines Flächenheizelementes, möglich. Ein weiterer Mangel eines mit einem Bimetallschalter ausgebildeten Flächenheizelementes besteht darin, dass die Betriebstemperatur des Flächenheizelementes durch den verwendeten Bimetallschalter festgelegt ist und nicht eingestellt werden kann. Wird also ein anderer Betriebstemperaturbereich gewünscht als der mit dem im Flächenheizelement vorgesehenenBimetallschalter erzielte Temperaturbereich, so ist es erforderlich, den im Einsatz befindlichen Bimetallschalter durch einen anderen Bimetallschalter mit einem anderen Schaltverhalten zu ersetzen.

Der Erfindung liegt die Aufgabe zugrunde, ein Flächenheizelement der eingangs genannten Art zu schaffen, bei dem die Rillen zur Aufnahme des Heizelementes einfach ausgebildet sind und bei dem nur ein sehr kleiner Anteil der Gesamtlänge der Rillen ungenutzt bleibt. Der Erfindung liegt ausserdem die Aufgabe zugrunde, eine Einrichtung der eingangs genannten Art zum Regeln der Temperatur eines solchen Flächenheizelementes zu - schaffen, mit der nicht nur die Raumtemperatur wunschgemäss eingestellt werden kann, sondern auch die Betriebstemperatur des Heizelementes.

Diese Aufgabe wird erfindungsgemäss dadurch gelöst, dass die Trägerplatte nebeneinander und zu gegenüberliegenden ersten Seiten der Trägerplatte parallele erste Rillen und in der Nachbarschaft der beiden zweiten Seiten der Trägerplatte je eine zweite Rille aufweist, und dass die sich kreuzenden Eckbereiche zwischen den ersten und zweiten Rillen derart abgerundet sind, dass benachbarte erste Rillen abwechselnd mit der einen und der anderen zweiten Rille einen abgerundeten Umlenkabschnitt für das mäanderförmige Heizelement bilden. Die nebeneinander parallel verlaufenden ersten Rillen werden beispielsweise mittels eines Mehrfachwerkzeuges in Gestalt eines Schleif-, Fräs-oder Sägewerkzeuges in die Trägerplatte eingeschnitten. Mit dem gleichen Mehrfachwerkzeug können die in der Nachbarschaft der beiden zweiten Seiten der Trägerplatte vorgesehenen zweiten Rillen in die Trägerplatte eingebracht werden. Die Abrundungen der sich kreuzenden Eckbereiche zwischen den ersten und den zweiten Rillen werden beispielsweise mittels eines Fräswerkzeuges hergestellt. Bei rechteckig ausgebildeten Trägerplatten ist es empfehlenswert, die nebeneinander parallel verlaufenden ersten Rillen zu den beiden Längsseiten der Trägerplatte parallel zu orientieren und die zweiten Rillen in der Nachbarschaft der Breitseiten der Trägerplatte vorzusehen.

Es hat sich als vorteilhaft erwiesen, dass im Bereich zwischen einer zweiten Seite und der in der Nachbarscahft dieser zweiten Seite verlaufenden zweiten Rille in der Trägerpaltte eine dritte Rille vorgesehen ist, die in den Kreuzungsbe reichen mit den beiden in der Nähe der beiden ersten Seiten der Trägerplatte verlaufenden ersten Rillen abgerundet ist. Diese mit den beiden äussersten ersten Rillen abgerundete Kreuzungsbereiche aufweisende dritte Rille dient zur Rückleitung des Heizelementes, so dass sich ein Flächenheizelement ergibt, bei dem die beiden Anschlussenden des Heizelementes eng benachbart nebeneinander angeordnet sind. Eine derartige Anordnung der Anschlussenden kann aus Montagegegründen von Vorteil sein.

Die Raumtemperaturregeleinrichtung weist vorzugsweise einen Spannungsteiler aus einem temperaturabhängigen Widerstand und einem veränderbaren Widerstand auf, der Verbindungspunkt zwischen dem temperaturabhängigen Widerstand und dem veränderbaren Widerstand ist vorzugsweise mit einem Eingang eines Verstärkers verbunden, dessen Ausgang mit einem Eingang eines UND-Gatters verbunden ist, es ist vorzugs-. weise eine Einrichtung zur Einstellung der Betriebstemperatur des elektrischen Heizelementes vorgesehen, die einen Stufenschalter aufweist, an dessen Schaltstufen mit ihren ersten Anschlusselementen unterschiedliche elektrische Widerstände angeschlossen sind, deren zweite Anschlusselemente in einem Schaltpunkt zusammengeschaltet und mit einem zweiten temperaturabhängigen Widerstand zu einem Spannungsteiler in Reihe geschaltet sind, wobei der Schaltpunkt mit dem Eingang eines zweiten Verstärkers verbunden ist, der Ausgang des zweiten Verstärkers ist vorzugsweise mit dem zweiten Eingang des UND-Gatters verbunden, und der Ausgang des UND-Gatters ist vorzugsweise mit einer Schaltstufe verbunden, die ein Schaltrelais aufweist, dessen Schaltkontakte sich im Stromkreis des elektrischen Heizelementes befinden.

Bei dem veränderbaren Widerstand der Temperaturregeleinrichtung kann es sich um ein Drehpotentiometer handeln, mit dessen Hilfe die Raumtemperatur stufenlos wunschgemäss eingestellt werden kann.Bei dem mit dem veränderbaren Widerstand in Reihe zu einem Spannungsteiler zusammengeschalteten temperaturabhängigen Widerstand kann es sich um einen sog. NTC-Widerstand handeln. Infolge sich verändernder Raumtemperatur ändert sich der elektrische Widerstand des temperaturabhängigen Widerstandes entsprechend, so dass sich die Spannung am Eingang des Verstärkers der Temperaturregeleinrichtung ändert. Diese Spannungsänderung bewirkt eine Änderung der Spannung am Ausgang des genannten Verstärkers, d.h. eine Änderung der Spannung am einen Eingang des UND-Gatters. Ist die gewünschte und mit dem veränderbaren Widerstand der Raumtemperaturregeleinrichtung eingestellte Temperatur nicht erreicht, so wird der genannte Eingang des UND-Gatters durchgeschaltet und das Schaltrelais der Schaltstufe derart erregt, dass die im Stromkreis des elektrischen Heizelementes vorgesehenen Schaltkontakte geschlossen werden. In diesem Zustand fliesst durch das an eine Spannugnsquelle, beispielsweise an das 220 bzw. 380 Voltnetz angeschlossene Heizelement ein elektrischer Strom, der das Heizelement aufheizt. Wenn durch das erhitzte Heizelement die Raumtemperatur erreicht wird, ändert sich der elektrische Widerstand des veränderbaren Widerstandes der Raumtemepraturregeleinrichtung und damit der Spannungsabfall an diesem veränderbaren Widerstand derart, dass über den Ausgang des zuge hörigen Verstärkers, d.h. den zugeordneten Eingang des UND-Gatters die Erregung des Schaltrelais der Schaltstufe so geändert wird, dass die im Stromkreis des elektrischen Heizelementes vorgesehenen Schaltkontakte unterbrochen werden. In diesem Schaltzustand fliesst durch das elektrische Heizelement kein Strom, so dass das elektrische Heizelement nicht weiter erhitzt wird. Auf diese Weise kann das elektrische Heizelement beispielsweise in einem Kurzzeitbetrieb oder in einem abschaltenden Betrieb geregelt werden. Eine entsprechende Regelung ist mit der Einrichtung zur Einstellung der Betriebstemperatur des elektrischen Heizelementes möglich, die zu diesem Zweck vorzugsweise mit einem Stufenschalter ausgebildet ist, an dessen Schaltstufen unterschiedliche elektrische Widerstände angeschlossen sind. Durch passende Dimensionierung dieser elektrischen Widerstande ist es beispielsweise möglich, die Betriebstemperatur des Heizelementes, insbesondere des Flächenheizelementes, in Temperaturstufen von 30°C, 35°C, 45°C, 55°C, 65°C, 75°C und 85°C einzustellen und in engen Temperaturgrenzen.von wenigen Graden genau zu regeln. Dadurch, dass sowohl der Ausgang derRaumtemperaturregeleinrichtung als auch der Ausgang der Betriebstemperaturregeleinrichtung mit je einem Eingang des UND-Gatters verbunden sind, ergibt sich mit der erfindungsgemässen Einrichtung ein Schaltverhalten, bei dem die Raumtemperaturregeleinrichtung die Betriebstemperaturregeleinrichtung führt. Das bedeutet, dass mit Hilfe der Raumtemperaturregeleinrichtung der Stromkreis des elektrischen Heizelementes auch dann unterbrochen wird, wenn zwar noch nicht die Betriebstemperatur des Flächenheizelementes erreicht worden ist, aber wenn die gewünschte Raumtemperatur erzielt ist.

Selbstverständlich wäre es auch möglich, die Betriebstemperaturregeleinrichtung nicht mit einzelnen elektrischen Widerständen stufenweise veränderbar auszubilden, sondern ebenfalls mit einem stufenlos veränderbaren elektrischen Widerstand.

Durch die erfindungsgemässe Ausbildung der Einrichtung mit einer Einrichtung zur Regelung der Betriebstemperatur des elektrischen Heizelementes kann das Wohlbefinden in einem mit einem elektrischen Heizelement, insbes. einem Flächenheizelement, ausgestatteten Raum wesentlich verbessert werden.

An den Schaltpunkt der Betriebstemperatureinstelleinrichtung ist vorzugsweise ein Anschluss einer Fühlerunterbrechungsschaltung angeschlossen, die mit ihrem zweiten Anschluss an den Ausgang des UND-Gatters angeschlossen ist. Diese Fühlerunterbrechungsschaltung weist den Vorteil auf, dass bei einer Unterbrechung des temperaturabhängigen Widerstandes der Betriebstemperatureinstelleinrichtung das Schaltrelais derart angesteuert wird, dass der Stromkreis des elektrischen Heizelementes unverzüglich unterbrochen wird. Auf diese Weise ergibt sich eine ausgezeichnete Betriebssicherheit der erfindungsgemässen Einrichtung.

Als zweckmässig hat es sich erwiesen, dass eine Stromversorgungsschaltung mit einem Netztransformator und einer Gleichrichterschaltung vorgesehen ist, wobei der Ausgang der Gleichrichterschaltung an den Spannungsteiler und den Verstärker der Raumtemperaturregeleinrichtung, an den Spannungsteiler und den Verstärker der Betriebstemperatureinstelleinrichtung, an die Schaltstufe mit dem Schaltre lais und an die Fühlerunterbrechungsschaltung angeschlossen ist.

Am Ausgang des Verstärkers der Raumtemperaturregeleinrichtung und parallel zum Relais der Schaltstufe kann zur Anzeige des Betriebszustandes der erfindungsgemässen Einrichtung je ein Anzeigeelement vorgesehen sein. Dabei kann es sich um Leuchtdioden handeln. Die Leuchtdioden am Ausgang der Raumtemperaturregeleinrichtung bzw. die Leuchtdiode in der das Schaltrelais aufweisenden Schaltstufe leuchten, wenn die eingestellte Raumtemperatur bzw. wenn die eingestellte Betriebstemperatur der Heizplatte nicht erreicht ist.

Die Raumtemperaturregeleinrichtung mit ihrem temperaturabhängigen Widerstand, die Betriebstemperatur mit Aüsnahme ihres temperaturabhängigen Widerstandes, die Fühlerunterbrechungsschaltung, das UND-Gatter, die Schaltstufe mit dem Schaltrelais und die Stromversorgungsschaltung sind vorzugsweise in einem Gehäuse angeordnet, und der temperaturabhängige Widerstand der Betriebstemperaturregeleinrichtung ist vorzugsweise am Heizelement angeordnet. Wenn es sich bei diesem Heizelement um ein an sich bekanntes Flächenheizelement mit einer Trägerpaltte und einem Heizwiderstandselement handelt, ist der tmeperaturabhängige Widerstand der Betriebstemperaturregeleinrichtung vorzugsweise an der Trägerplatte des Flächenheizelementes befestigt.

Der veränderbare Widerstand der Raumtemperaturregeleinrichtung und der Stufenschalter der Betriebstemperatureinstelleinrichtung stehen vorzugsweise mit je einem Drehknopf aus dem Gehäuse der erfindungsgemässen Einrichtung vor. Mit dem Drehknopf der Raumtemperaturregeleinrichtung kann die gewünschte Raumtemperatur kontinuierlich eingestellt werden. Zu diesem Zweck ist am Gehäuse eine Skala vorgesehen, die den Drehknopf der Raumtemperaturregeleinrichtung umgibt. Mit dem Stufenschalter der Betriebstemperatureinstelleinrichtung kann die Betriebstemperatur des elektrischen Heizelementes insbes. des Flächenheizelementes, in Stufen wunschgemäss eingestellt werden. Zu diesem Zweck ist auch der Drehknopf des Stufenschalters der Betriebstemperatureinstelleinrichtung von einer Temperaturskala umgeben. Diese Temperaturskala kann beispielsweise die Temperaturen 30°C, 35°C, 45°C, 55°C, 65°C, 75°C und 85°C aufweisen. Selbstverständlich ist es auch möglich, eine andere Temperaturskala zu wählen, wenn die an den Stufenschalter angeschlossenen elektrischen Widerstände entsprechend anders dimensioniert sind. Mit diesen beiden am Gehäuse der Einrichtung vorgesehenen Drehknöpfe ist es einfach möglich, sowohl die Betriebstemperatur des Heizelementes als auch die Raumtemepratur wunschgemäss zu wählen bzw. einzustellen.

Das Gehäuse der erfindungsgemässen Einrichtung kann über eine Anschlussleitung mit einem Netzstecker verbunden oder unmittelbar mit dem Netzstecker ausgebidlet sein. Im zuerst genannten Fall ist die Lokalisierung der erfindungsgemässen Einrichtung vom Ort einer Anschlussdose unabhängig, während im zweiten Fall die erfindungsgemässe Einrichtung mit ihrem Gehäuse am Ort der Steckdose angeordnet ist. Bei der zuletzt genannten Ausbil dung der erfindungsgemässen Einrichtung kann die Einstellung der gewünschten Raumtemperatur/oder der gewünschten Betriebstemperatur eines Flächenheizelementes mit einem gewissen Aufwand verbunden sein, wenn die Anschlussdose für das Heizelement sich an einem - schlecht zugänglichen Ort befindet.

Es hat sich als vorteilhaft erwiesen, dass das Gehäuse der erfindungsgemässen Einrichtung mittels einer Mehrdrahtleitung mit dem elektrischen Heizelement verbunden ist, wobei mindestens zwei Anschlussleitungen zum Anschluss an das Heizelement und zwei weitere Anschlussleitungen zum Anschluss des temperaturabhängigen Widerstandes der Betriebstemperaturregeleinrichtung vorgesehen sind. Zwei Anschlussleitungen zum Anschluss des Heizelementes sind erforderlich, wenn das Heizelement aus dem üblichen Stromversorgugnsnetz, z.B. einem 220 Volt-Netz versorgt wird. Wird das elektrische Heizelement jedoch aus einem 380 Volt-Netz versorgt, dann sind mindestens drei Anschlussleitungen zwischen dem Gehäuse der erfindungsgemässen Einrichtung und dem elektrischen Heizelement erforderlich, wenn das elektrische Heizelement in einer Stern-oder in einer Dreieckschaltung geschaltet ist.

Weitere Einzelheiten und Vorteile ergeben sich aus der nachfolgenden Beschreibung eines in der Zeichnung dargestellten Ausführungsbeispieles des Flächenheizelementes und der Einrichtung zum Regeln der Temperatur des Flächenheizelementes. Es zeigt:

Fig. 1 eine Draufsicht auf ein Flächenheizelement,

Fig. 2 eine räumliche Darstellung der in einem Gehäuse angeordneten Einrichtung zum Regeln der Temperatur des elektrischen Flächenheizelementes, das im Vergleich zum Gehäuse der Einrichtung in einem kleineren Maßstab schematisch dargestellt ist,

Fig. 3 eine Ansicht der Einrichtung gemäss Fig. 2 in Blickrichtung des Pfeiles 11, und

Fig. 4 eine elektrische Schaltung der Einrichtung zum Regeln der Temperatur eines elektrischen Heizelementes.

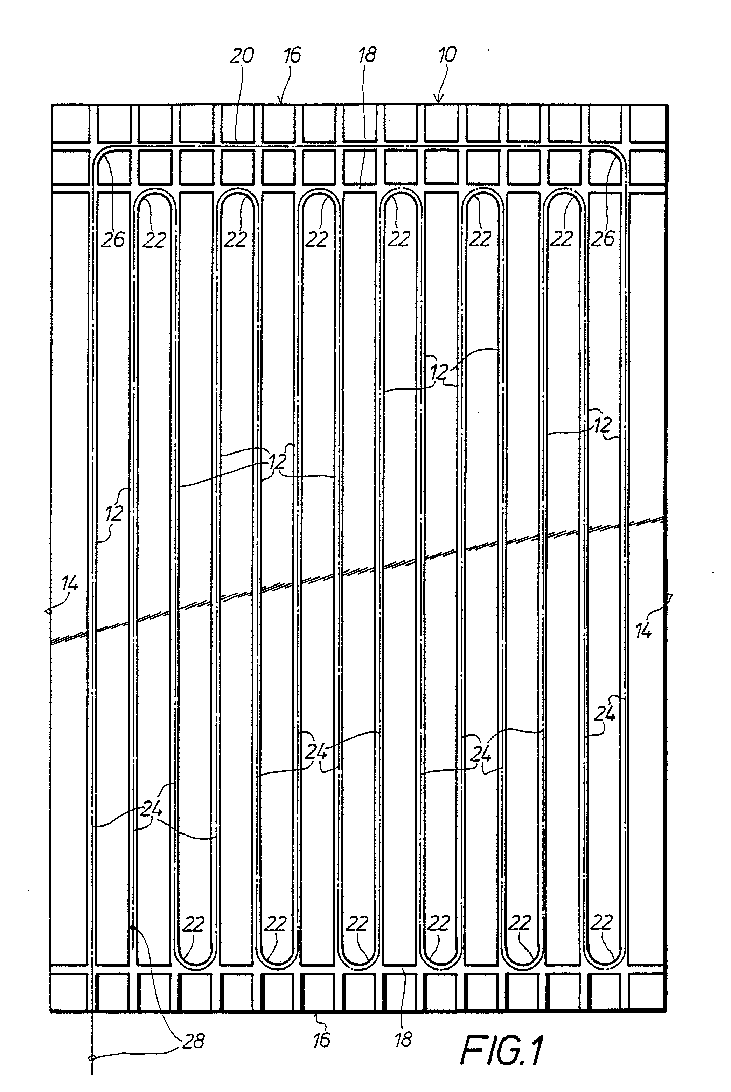

Figur 1 zeigt eine Ansicht eines Flächenheizelementes von vorne, wobei in einer Trägerplatte 10 erste Rillen 12 angeordnet sind, die zu den ersten Seiten 14 der Trägerplatte 10 parallel verlaufen. Die ersten Rillen 12 weisen voneinander einen konstanten Abstand auf. In der Nachbarschaft der zweiten Seiten 16 der Trägerplatte 10 sind in der Trägerplatte 10 zweite Rillen 18 vorgesehen, die zu den beiden zweiten Seiten 16 parallel orientiert sind. Zwischen der (in der Zeichnung oberen) zweiten Rille 18 und der zu dieser zweiten Rille 18 benachbarten zweiten Seite 16 der Trägerplatte 10 ist in der Trägerpaltte 10 eine dritte Rille 20 ausgebildet. Die Rillen 18 und 20 können mit dem gleichen Werkzeug in der Trägerpaltte 10 ausgebildet werden, wie die ersten Rillen 12. In diesem Fall ist nur ein einziges Werkzeug erforderlich, bei dem es sich in vorteilhafter Weise um ein Mehrfachwerkzeug handelt. Mit einem solchen Mehrfachwerkzeug können die ersten Rillen 12 in einem einzigen Vorschub-Arbeitsgang hergestellt werden.Entsprechendes gilt für die Herstellung der rillen 18 und 20. Die sich kreuzenden Eckbereiche 22 zwischen den ersten Rillen 12 und den zweiten Rillen 18 sind derart abgerundet, dass benachbarte erste Rillen 12 abwechselnd mit der einen und der anderen zweiten Rille 18 einen abgerundeten Umlenkabschnitt für das mäanderförmige Heizelement 24 bilden. Das Heizelement 24 ist in der Zeichnugn nur durch eine strichpunktierte Linie angedeutet. Die dritte Rille 20 kreuzt die ersten Rillen 12, und die Kreuzungsbereiche der dritten Rille 20 mit den beiden äussersten ersten Rillen 12 sind mit Abrundungen 26 versehen. Diese Abrundungen 26 werden auf die gleiche Weise hergestellt wie die Abrundungen in den Eckbereichen 22.

Mit der Bezugsziffer 28 sind die beiden Anschlussenden des Heizelementes 24 bezeichnet, wobei ein Anschlussende 28 aus der Trägerplatte 10 vorsteht. Die Anschlusselemente 28 sind wie das übrige Heizelement 24 nur schematisch angedeutet.

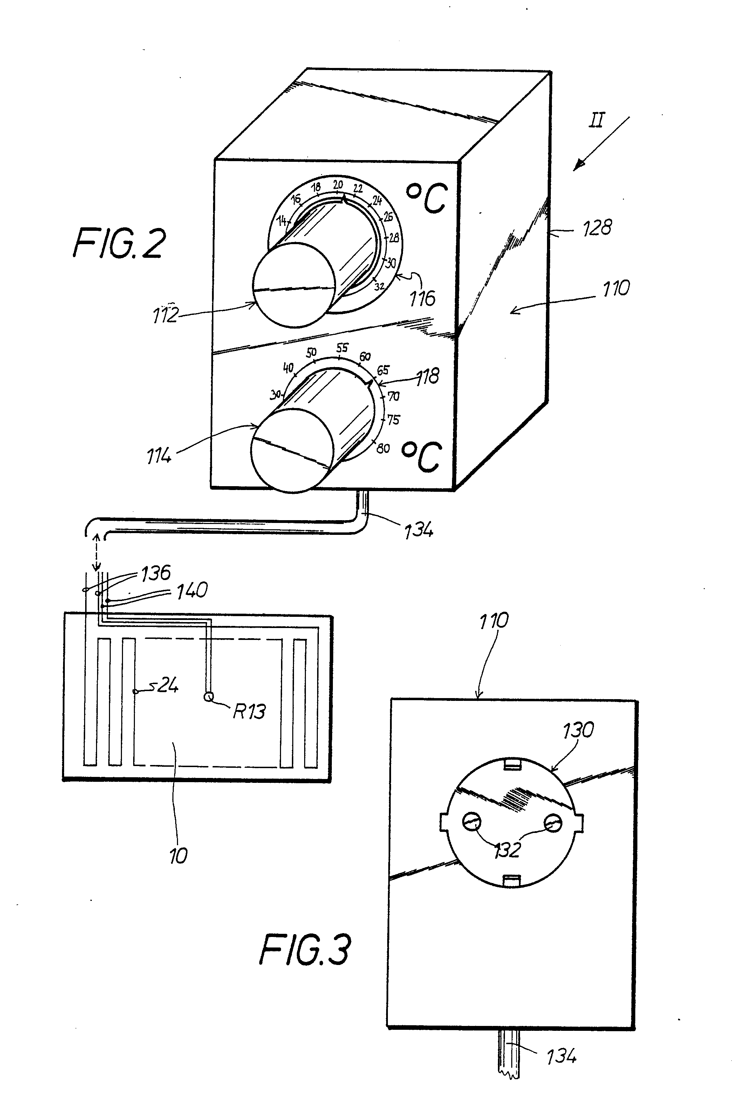

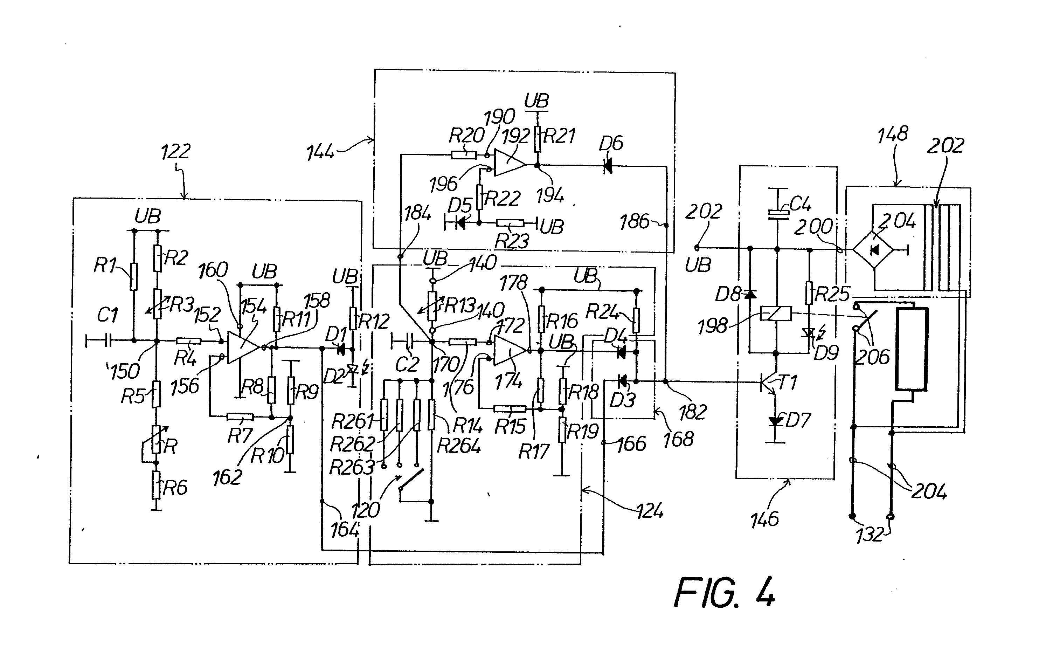

Figur 2 zeigt ein Gehäuse 110 aus dem ein Drehknopf 112 und ein Drehknopf 114 auf einer Seite vorstehen. Eine Temperaturskala 116 umgibt den Drehknopf 112 und eine Temperaturskala 118 umgibt den Drehknopf 114. Der Drehknopf 112 ist an einem veränderbaren Widerstand R vorgesehen und der Drehknopf 114 ist an einem Stufenschalter 120 (sh. Figur 3) vorgesehen, wobei der veränderbare Widerstand R in einer Raumtemperaturregeleinrichtung 122 und der Stufenschalter 120 in einer Betriebstemperaturregeleinrichtung 124 vorgesehen ist, die weiter unten in Verbindung mit Figur 4 detailliert beschrieben werden. Mit dem Drehknopf 112 kann die Raumtemp eratur stufenlos beispielsweise zwischen 0°C und 30°C eingestellt werden. Demgegenüber kann mit dem Drehknopf 114 die Betriebstemperatur des Flächenheizelementes stufenweise beispielsweise in den an der Skala 118 angegebenen Temperaturstufen eingestellt werden.

Auf der von den Drehknöpfen 112 und 114 abgewandten Rückseite 128 des Gehäuses 110 der erfindungsgemässen Einrichtung ist an das Gehäuse 110 unmittelbar ein Netzstecker 130 angeformt, der zwei Steckkontakte 132 aufweist.

Wie aus den Figuren 2 und 3 ersichtlich ist, ist das Gehäuse 110 der Einrichtung zum Regeln der Temperatur des elektrischen Flächenheizelementes mit dem Flächenheizelement über eine Anschlussleitung 134 verbunden. Die Anschlussleitung 134 weist Zuleitungen 136 auf, die mit dem elektrischen Widerstandsheizungselement 24 verbunden ist. Ausserdem weist die Anschlussleitung 134 Leitungen 140 auf, durch welche ein temperaturabhängiger Widerstand R13 mit der im Gehäuse 110 befindlichen Einrichtung elektrisch leitend verbunden ist. Der temperaturabhängige Widerstand R13, bei dem es sich vorzugsweise um einen NTC-Widerstand handelt, ist am Trägerkörper 10 des Flächenheizelementes angeordnet.

Figur 4 zeigt in einer Blockdarstellung die Raum temperaturregeleinrichtung 122, die Betriebstemperaturregeleinrichtung 124, sowie eine Fühlerunterbrechungsschaltung 144, eine Schaltstufe 146, eine Stromversorgungsschaltung 148 und eine schematische Darstellung des Flächenheizelementes, das mittels der Steckkontakte 132 an eine Netzsteckdose anschliessbar ist. Gleichzeitig mit dem Anschluss des Flächenheizelementes an eine Netzsteckdose wird auch die Stromversorgungsschaltung 148 bzw. die gesamte erfindungsgemässe Einrichtung an das Spannungsnetz angeschlossen.

Die Raumtemperaturregeleinrichtung 122 weist einen Spannungsteiler auf, der aus den in Reihe geschalteten elektrsichen Widerständen R2, R3, R5, R und R6 besteht. Bei dem Widerstand R3 handelt es sich um einen temperaturabhängigen Widerstand, vorzugsweise um einen NTC-Widerstand. Der Widerstand R ist als stufenlos veränderbarer elektrischer Widerstand ausgebildet. Parallel zu den Widerständen R2 und R3 ist ein Widerstand R1 geschaltet. Der Spannungsteiler R2, .R3, R5, R und R6 liegt einseitig an der Betriebsspannugn UB und mit seiner gegenüberliegenden zweiten Seite auf Masse. Der Verbindungspunkt 150 zwischen dem temperaturabhängigen Widerstand R3 und dem Festwiderstand R5 liegt einerseits über einen Kondensator CI auf Masse und andererseits über einen Festwiderstand R4 am einen Eingang 152 eines Vestärkers 154. Der zweite Eingang 156 des Verstärkers 154 ist über Widerstände R7 und R8 mit dem Ausgang 158 des Verstärkers 154 verbunden. Der Verstärker 154 weist ausserdem einen Anschluss 160 auf, der über einen Festwiderstand R11 mit dem Ausgang 158 des Verstärkers 154 verbunden ist. Der Anschlsus 160 des Verstärkers 154 liegt auf dem Betriebsspannungspotential UB. Ein Spannungsteiler, bestehend aus einem Widerstand R9 und einem Widerstand R10 liegt einseitig auf dem Betriebsspannungspotential UB und mit seiner anderen Seite auf Masse. Der Teilerpunkt 162 des aus den Festwiderständen R9 und R10 bestehenden Spannungsteilers ist mit einem Schaltungspunkt zwischen den Festwiderständen R7 und R8 verbunden. Der Ausgang 158 des Verstärkers 154 ist mit einer Diode D1 zusammengeschaltet, die zwischen einem Festwiderstand R12 und einer mit dem Festwiderstand R12 in Reihen geschalteten Leuchtdiode an einem Schaltpunkt zwischen dem Widerstand R12 und der Leuchtdiode D2 verbunden ist. An der dem Anschluss der Diode D1 gegenüberliegenden Seite des Festwiderstandes R12 liegt das Betriebsspannungspotential UB und auf der von der Diode DI abgewandten Seite der Leuchtdiode D2 befindet sich ein Masseanschluss.

Der Ausgang der Raumtemperaturregeleinrichtung 122, der durch die Leitung 164 dargestellt ist, ist mit einem Eingang 166 eines UND-Gatters 168 verbunden Das UND-Gatter 168 weist eine Diode 03 und eine Diode D4 auf.

Die Betriebstemperaturregeleinrichtung 124 weist einen Stufenschalter 120 auf, an dessen Schaltstufen verschiedene Festwiderstände R261 bis R264 angeschlossen sind. Die zweiten Enden der Festwiderstände R261 bis R264 sind miteinander elektrisch leitend verbunden. Diese miteinander verbundenen zweiten Anschlüsse der Festwiderstände R261 bis R264 liegen auf dem Potential eines Schaltpunktes 170, der über einen Kondensator C2 auf Masse liegt.

Mit dem Schaltpunkt 170 ist ausserdem das eine Ende eines temperaturabhängigen Widerstandes R13 verbunden, dessen zweiter Anschluss auf dem Betriebsspannungspotential UB liegt. Bei diesem temperaturabhängigen Widerstand R13 kann es sich wie bei dem temperaturabhängigen Widerstand R3 der Raumtemperaturregeleinrichtung 122 und einen NTC-Widerstand handeln. Der temperaturabhängige Widerstand R13 ist nicht im Gehäuse 110 der erfindungsgemässen Einrichtung, sondern am Flächenheizelement (sh. Figur 1) angeordnet und mittels der Verbindungsleitungen 140 mit der Einrichtung bzw. dem Gehäuse 110 der Einrichtung verbunden. Der Schaltpunkt 170 ist ausserdem über einen Festwiderstand R14 mit einem Eingang 172 eines Verstärkers 174 verbunden. Der zweite Eingang 176 des Verstärkers 174 ist über einen Festwiderstand R15 und einen mit dem Festwiderstand R15 in Reihe geschalteten Festwiderstand R17 mit dem Ausgang 78 des Verstärkers 174 der Betriebstempëraturregeleinrichtung 124 verbunden. Die Verbindung zwischen den Widerständen R15 und R17 ist mit einer Verbindung zweier Widerstände R18 und R19 verbunden, die miteinander in Reihe geschaltet sind. Der Festwiderstand R18 liegt einseitig auf dem Betriebsspannungspotential UB und der Festwiderstand 119 liegt mit seiner der Verbindung gegenüberliegenden zweiten Seite auf Masse. Der Ausgang 178 des Verstärkers 174 ist mit dem zweiten Eingang 180, d.h. mit der Diode D4 des UND-Gatters 168 verbunden. Der Ausgang 178 des Verstärkers 174 ist ausserdem mit einem Festwiderstand R16 verbunden, dessen zweiter Anschluss auf dem Betriebsspannungspotential UB liegt. Ein Festwiderstand R24 liegt einseitig auf dem Betriebsspannungspotential UB und mit seinem zweiten An schlussende am Ausgang 172 des UND-Gatters 168.

Die Fühlerunterbrechungsschaltung 144 ist mit ihrem einen Pol 184 mit dem Schaltpunkt 170 der Betriebstemperaturregeleinrichtung 124 und mit ihrem zweiten Pol 186 mit dem Ausgang 182 des UND-Gatters 168 verbunden. Der erste Pol 184 der Fühlerunterbrechungsschaltung 144 ist über einen Festwiderstand R20 mit einem Eingang 190 eines Verstärkers 192 verbunden, dessen Ausgang 194 über eine Diode D6 mit dem zweiten Pol 186 verbunden ist. Der Verstärker 192 weist einen zweiten Eingang 196 auf, der mit einem Festwiderstand R22 verbunden ist.Der Festwiderstand R22 ist mit seinen vom Eingang 196 abgewandten zweiten Anschluss zwischen eine Diode D5 und einen mit der Diode D5 in Reihe geschalteten Festwiderstand R23 eingeschaltet. Die Reihenschaltung aus der Diode D5 und dem Festwiderstand R23 liegt einseitig auf Masse und andererseits auf dem Betriebsspannungspotential UB, wobei die Diode D5 auf Masse und der Festwiderstand R23 auf dem Betriebsspannungspotential UB liegt. Das Betriebsspannungspotential UB wird ausserdem über einen Festwiderstand R21 an den Ausgang 194 des Verstärkers 192 angeschlossen.

Die Schaltstufe 146 weist ein Relais 198, einen Transistor T1 und eine Diode D7 auf. Ausserdem weist die Schaltstufe 146 einen Elektrolytkondensator C4, eine Diode D8, einen Festwiderstand R25 und eine Leuchtdiode D9 auf. Der Elektrolytkondensator C4, die Erregerwicklung des Schaltrelais 198, der Transistor T1 und die Diode D7 sind miteinander in Reihe geschaltet. Die Diode D8 ist zur Erregerwicklung des Schaltrelais 198 parallelgeschaltet. Der Festwiderstand R25 und die Leuchtdiode D9 sind miteinander in Reihe und zur Erregerwicklung des Schaltrelais 198 parallel geschaltet.

Die Basis des Transistors T1 ist mit dem Ausgang des UND-Gatters 168 elektrisch leitend verbunden.

Der Elektrolytkondensator C4 liegt mit seinem einen Pol auf Masse; desgleichen liegt der eine Pol der Diode D7 auf Masse. Der zweite Pol des Elektrolytkondensators C4 ist mit dem Gleichspannungsausgang 200 der Stromversorgungsschaltung 148 verbunden. M it der Bezugsziffer 202 ist ein Ausgang bezeichnet, der auf dem Betriebsspannungspotential UB liegt, und der mit den mit UB bezeichneten Anschlüssen der Raumtemperaturregeleinrichtung 122, der Betriebstemperaturregeleinrichtung 124 und der Fühlerunterbrechungsschaltung 144 verbunden ist. Diese Verbindung ist nicht dargestellt, um die Obersichtlichkeit der Schaltung gemäss Figur 4 nicht zu gefährden.

Die Stromversorgungsschaltung 148 weist einen Transformator 202 und eine Gleichrichterschaltung 204 auf. Die Primärseite des Transformators 202 ist zum elektrischen Heizelement parallelgeschaltet. Das elektrische Heizelement ist mit Stromversorgungsleitungen 204 verbunden, wobei eine der Stromversorgungsleitungen 204 mit Schaltkontakten 206 des Schaltrelais 198 versehen ist. Sind die Schaltkontakte 206 durch das Schaltrelais 198 geschlossen, so wird das elektrische Flächenheiz element stromdurchflossen, so dass es sich erwärmt.

Sobald die mittels der Raumtemperaturregeleinrichtung 122 bzw. mittels der Betriebstemperaturregeleinrichtung 124 eingestellte Temperatur des Raumes bzw. des Flächenheizelmenetes erreicht ist, wird das Schaltrelais 198 durch die in Figur 4 dargestellte Schaltung derart angesteuert, dass die Schaltkontakte 206 geöffnet und der Stromfluss durch das Flächenheizelement hindurch unterbrochen wird. Dabei ist die Schaltung derart ausgelegt, dass die Raumtemperaturregeleinrichtung 122 die Betriebstemperaturregeleinrichtung 124 führt, d.h. dass die Schaltkontakte 206 auch dann unterbrochen werden, wenn die Raumtemperatur erreicht ist, ohne dass die mittels des Stufenschalters 120 eingestellte Betriebstemperatur des Flächenheizelementes erreicht worden ist.

In der nachfolgenden Tabelle sind die Werte der in der in Figur 4 dargestellten Schaltung verwendeten elektrischen Bauelemente angegeben:

| R1 | 130k ± 1 % |
| R2 | 4,7k ± 2 % |
| R3 NTC k 164 | 100k ± 5 % |
| R4 | 100k ± 2 % |
| R5 | 27k ± 1 % |
| R | 22k |
| R6 | 27k ± 1 % |
| R7 | 100k ± 2 % |
| R8 | 1M ± 2 % |
| R9 | 10k ± 1 % |
| R10 | 10k ± 1 % |
| R11 | 10k ± 1 % |
| R12 | 1k ± 1 % |
| R13 NTC k 164 | 100k ± 5 % |
| R14 | 100k ± 2 % |
| R15 | 100k ± 2 % |
| R16 | 100k ± 1 % |
| R17 | 100k ± 2 % |
| R18 | 10k ± 1 % |
| R19 | 10k ± 1 % |
| R20 | 100k ± 2 % |
| R21 | 10k ± 1 % |
| R22 | 100k ± 2 % |
| R23 | 10k ± 1 % |
| R24 | 10k ± 2 % |
| R25 | |
| R261 | 12k ± 2 % |
| R262 | 22k ± 2 % |
| R263 | 51k ± 2 % |
| R264 | 27k ± 1 % |
| C1 | 0,1 μF |

C2    0,1 µF
C3
C4    220 IF.

## Ansprüche

1. Flächenheizelement mit einer Trägerplatte (10), die mit Rillen (12, 18, 20) versehen ist, in die ein Heizelement (24) eingelegt ist, **dadurch gekennzeichnet,** dass die Trägerplatte (10) nebeneinander und zu gegenüberliegenden ersten Seiten (14) der Trägerplatte (10) parallele erste Rillen (12) und in der Nachbarschaft der beiden zweiten Seiten (16) der Trägerplatte (10) je eine zweite Rille (18) aufweist, und dass die sich kreuzenden Eckbereiche (22) zwischen den ersten und den zweiten Rillen (12, 18) derart abgerundet sind, dass benachbarte erste Rillen (12) abwechselnd mit der einen und der anderen zweiten Rille (18) einen abgerundeten Umlenkabschnitt für das mäanderförmige Heizelement (24) bilden.

2. Flächenheizelement nach Anspruch 1, **dadurch gekennzeichnet,** dass im Bereich zwischen einer zweiten Seite (16) und der in der Nachbarschaft dieser zweiten Seite (16) verlaufenden zweiten Rille (18) in der Trägerplatte (10) eine dritte Rille (20) vorgesehen ist, die in den Kreuzungsbereichen mit den beiden in der Nähe der beiden ersten Seiten (14) der Trägerplatte (10) verlaufenden ersten Rillen (12) mit Abrundungen (26) versehen ist.

3. Einrichtung zum Regeln der Temperatur eines elektrischen Heizelementes, insbesondere eines Flächenheizelementes mit eine Regeleinrichtung (122) für die Raumtemperatur und mit eine Schaltungseinrichtung (198) zur Unterbrechung bzw. Einschaltung des Stromflusses zwischen einer Stromquelle und dem Heizelement, **dadurch gekenneichnet,** dass die Raumtemperaturregeleinrichtung (122) einen Spannungsteiler aus einem temperaturabhängigen Widerstand (R3) und einem veränderbaren Widerstand (R) aufweist, dass der Verbindungspunkt (150) zwischen dem temperaturabhängigen Widerstand (R3) und dem veränderbaren Widerstand (R) mit einem Eingang (152) eines Verstärkers (154) verbunden ist, dessen Ausgang (158) mit einem Eingang (166) eines UND-Gatters (168) verbunden ist, dass eine Einrichtung (124) zur Einstellung der Betriebstemperatur des elektrischen Heizelementes (126) vorgesehen ist, die einen Stufenschalter (120) aufweist, an dessen Schaltstufen mit ihren ersten Anschlusselementen unterschiedliche elektrische Widerstände (R261, R262, R263, R264) angeschlossen sind, deren zweite Anschlusselemente in einem Schaltpunkt (170) zusammengeschaltet und mit einem zweiten temperaturabhängigen Widerstand R13) zu einem Spannungsteiler in Reihe geschal tet sind, wobei der Schaltpunkt (170) mit dem Eingang (172) eines zweiten Verstärkers (174) verbunden ist, dass der Ausgang (178) des zweiten Verstärkers (174) mit dem zweiten Eingang (180) des UND-Gatters (168) verbunden ist, und dass der Ausgang (182) des UND-Gatters (168) mit einer Schaltstufe (146) verbunden ist, die ein Schaltrelais (198) aufweist, dessen Schaltkontakte (206) sich im Stromkreis des Heizelementes (126) befinden.

4. Einrichtung nach Anspruch 3, **dadurch gekennzeichnet,** dass an den Schaltpunkt (170) der Betriebstemperatureinstelleinrichtung (124) ein Anschluss (184) einer Fühlerunterbrechungsschaltung (144) angeschlossen ist, die mit ihrem zweiten Anschluss (186) an den Ausgang (182) des UND-Gatters angeschlossen ist.

5. Einrichtung nach Anspruch 3 oder 4, **dadurch gekennzeichnet,** dass eine Stromversorgungsschaltung (148) mit einem Netztransformator (202) und einer Gleichrichterschaltung (204) vorgesehen ist, wobei der Ausgang (200) der Gleichrichterschaltung (204) an den Spannungsteiler (R2, R3, R5, R, R6) und den Verstärker (154) der Raumtemperaturregeleinrichtung (122), an den Spannungsteiler (R13, R261 bis R264) und den Verstärker (174) der Betriebstemperatureinstelleinrichtung (124), an die Schaltstufe (146) mit dem Schaltrelais (198) und an die Fühlerunterbrechungsschaltung (144) angeschlossen ist.

6. Einrichtung nach einem der Ansprüche 3 bis 5, **dadurch gekennzeichnet,** dass am Ausgang (158) des Verstärkers (154) der Raumtemperaturregeleinrichtung (122) und parallel zum Relais (198) der Schaltstufe (146) zur Anzeige des Betriebszustandes je ein Anzeigeelement (D2, D9) vorgesehen ist.

7. Einrichtung nach einem der Ansprüche 3 bis 6, **dadurch gekennzeichnet,** dass die Raumtemperaturregeleinrichtung (122) mit ihrem temperaturabhängigen Widerstand (R3), die Betriebstemperaturregeleinrichtung (124) mit Ausnahme ihres temperaturabhängigen Widerstandes (R13), die Fühlerunterbrechungsschaltung (144), das UND-Gatter (168), die Schaltstufe (146) mit dem Schaltrelais (198) und die Stromversorgungsschaltung (148) in einem Gehäuse (110) angeordnet sind, und dass der temperaturabhängige Widerstand (R13) der Betriebstemperaturregeleinrichtung (124) am Heizelement angeordnet ist.

8. Einrichtung nach einem der Ansprüche 3 bis 7, **dadurch gekennzeichnet,** dass der veränderbare Widerstand (R3) der Raumtemperaturregeleinrichtung (122) und der Stufenschalter (120) der Betriebstemperatureinstelleinrichtung (124) mit je einem Drehknopf (112, 114) aus dem Gehäuse (110) der Einrichtung vorstehen.

9. Einrichtung nach Anspruch 7 oder 8, **dadurch gekennzeichnet,** dass das Gehäuse (110) der Einrichtung über eine Anschlussleitung mit einem Netzstecker verbunden oder unmittelbar mit dem Netzstecker (130) ausgebildet ist.

10. Einrichtung nach einem der Ansprüche 7 bis 9, **dadurch gekennzeichnet,** dass das Gehäuse (110) der Einrichtung mittels einer Mehrdrahtleitung (134) mit dem elektrischen Heizelement (126) verbunden ist, wobei mindestens zwei Anschlussleitungen (136) zum Anschluss an das Heizelement (138) und zwei weitere Anschlussleitungen (140) zum Anschluss des temperaturabhängigen Widerstandes (R13) vorgesehen sind.

FIG.1

FIG.2

FIG.3

FIG. 4

0 261 564